# EUROPÄISCHE PATENTANMELDUNG

(11) **EP 1 917 847 A1**
(43) Veröffentlichungstag der Anmeldung: **07.05.2008**
(21) Anmeldenummer: 07021102.4
(22) Anmeldetag: 29.10.2007
(51) Int. Cl.: A01D 34/62

(54) **Astanhebevorrichtung für einen Rasenmäher**

(30) Priorität: 31.10.2006 DE 102006051854
(71) Anmelder: Weis, Hans-Werner, 92260 Ammerthal/Viehberg (DE)
(72) Erfinder: Weis, Hans-Werner, 92260 Ammerthal/Viehberg (DE)
(74) Vertreter: Negendanck, Matthias

(57) **Zusammenfassung**

Der Erfindung liegt die Aufgabe zugrunde, eine verbesserte Astanhebevorrichtung vorzuschlagen.

Hierzu wird eine Astanhebevorrichtung 2 für einen Rasenmäher 1 vorgeschlagen, mit einem Astanheberarm 5 und mit einer Adaptereinrichtung 4, welche zur Montage an dem Rasenmäher 1 ausgebildet ist und mindestens eine mechanische Aufnahme 12, 13 für den Astanheberarm 5 aufweist, wobei der Astanheberarm 5 über die Aufnahme 12, 13 dreh- und/oder schwenkbar gelagert ist, so dass beim Mähen ein freies Ende 6 des Astanheberarms 5 auf dem Rasen aufliegt und auf dem Rasen befindliche Störkörper durch den Astanheberarm 5 angehoben werden, wobei die Adaptereinrichtung 4 mindestens zwei der Aufnahmen 12,13 aufweist, die so angeordnet sind, dass die Adaptereinrichtung 4 in mindestens zwei verschiedenen Orientierungen auf dem Rasenmäher 1 montierbar ist.

## Beschreibung

Die Erfindung betrifft eine Astanhebevorrichtung für einen Rasenmäher mit einem Astanheberarm und mit einer Adaptereinrichtung, welche zur Montage an dem Rasenmäher ausgebildet ist und mindestens eine mechanische Aufnahme für den Astanheberarm aufweist, wobei der Astanheberarm über die Aufnahme dreh- und/oder schwenkbar gelagert ist, so dass beim Mähen ein freies Ende des Astanheberarms auf dem Rasen aufliegt und auf dem Rasen befindliche Störkörper durch den Astanheberarm angehoben werden.

Die Gartenarbeit wird durch die Verwendung von Rasenmähern, insbesondere motorisch angetriebenen Rasenmähern, deutlich vereinfacht. So ist es mittlerweile ein Leichtes, große Rasenflächen in vergleichsweise kurzer Zeit zu mähen. Zeitaufwendig dagegen sind die Randbereiche der Rasenfläche, welche die Arbeit aufgrund von angrenzenden Pflanzen mit herabhängenden Zweigen, die beim Rasenmähen als Störkörper wirken, erschweren. Ohne weitere Hilfsmittel ist der Benutzer des Rasenmähers gezwungen, diese überhängenden Zweige oder Äste manuell hoch zu heben, um den darunter liegenden Rasenabschnitt zu mähen.

Zur Arbeitserleichterung bei diesem Problem wird in der Offenlegungsschrift DE 3505407 A1 eine Vorrichtung zum Anheben von tiefwachsenden Ästen, Zweigen und dergleichen vorgeschlagen, welche im Wesentlichen aus einem Schaufelrechen besteht, der auf einem Rasenmäher verschiebbar und schwenkbar gelagert ist. Bei der Benutzung der Vorrichtung wird mit dem Rasenmäher nahe an die tiefwachsenden Äste oder Zweige herangefahren, diese mit Hilfe des bewegbaren Schaufelrechens hochgehoben und dann das unter den tief wachsenden Ästen oder Zweigen befindliche Gras gemäht. Nachteilig bei dieser Vorrichtung erscheint es, dass das Rasenmähen zum Zwecke des Hochhebens der tiefwachsenden Äste oder Zweige unterbrochen werden muss.

Ein anderer Ansatz wird in der Druckschrift US 2,312,435 beschrieben, welche eine Astableitvorrichtung für mechanische Rasenmäher offenbart. Diese Astableitvorrichtung umfasst einen Befestigungsabschnitt, welcher auf einer Stoßstange eines motorlosen Rasenmähers befestigbar ist, einen unteren Astanheberabschnitt, welcher stechend vor dem Rasenmäher geführt wird und Äste oder dergleichen anhebt und einen oberen Astableiterabschnitt, welcher die angehobenen Äste oder dergleichen über den Rasenmäher führt. Diese Druckschrift bildet wohl den nächstkommenden Stand der Technik.

Der Erfindung liegt die Aufgabe zugrunde, eine verbesserte Astanhebevorrichtung vorzuschlagen.

Diese Aufgabe wird durch eine Astanhebevorrichtung mit den Merkmalen des Anspruchs 1 gelöst. Bevorzugte und/oder vorteilhafte Ausführungsformen der Erfindung ergeben sich aus der nachfolgenden Beschreibung sowie aus den beigefügten Figuren.

Erfindungsgemäß wird eine Astanhebevorrichtung für einen insbesondere motorisch angetriebenen Rasenmäher vorgeschlagen, wobei die Astanhebevorrichtung angeordnet und/oder ausgebildet ist, um im montierten Zustand durch ein Vorwärtsschieben des Rasenmähers Äste, Zweige oder dergleichen - nachfolgend als Störkörper zusammengefasst - anzuheben und gegebenenfalls weiterzuleiten. Hierzu weist die Astanhebevorrichtung eine Adaptereinrichtung, welche zur Montage an dem Rasenmäher, insbesondere an einer den Rasenmähermotor umgebenden Haube, ausgebildet ist, und einen Astanheberarm auf.

Der Astanheberarm ist in, über oder durch eine mechanische Aufnahme der Adaptereinrichtung vertikal dreh- oder schwenkbar gelagert, insbesondere derart, dass der Astanheberarm keine unmittelbare mechanische Verbindung mit dem Rasenmäher beziehungsweise mit der Haube aufweist. Der Astanheberarm ist im montierten Zustand so schwenkbar gelagert, dass beim Mähen ein freies Ende des Astanheberarms auf dem Rasen insbesondere stechend bzw. schleppend geführt aufliegt, wobei der Astanheberarm insbesondere geneigt auf dem Rasen aufgesetzt ist. Der Auflagedruck des freien Endes auf dem Rasen wird bevorzugt durch das Eigengewicht des Astanheberarms erzeugt, bei alternativen Ausführungsformen können ergänzend Gewichte und/oder Federvorspannungen oder dergleichen zur Verstärkung des Auflagedrucks vorgesehen werden. Funktionell betrachtet unterfährt der Astanheberarm mit seinem auf dem Rasen aufliegenden und stechend geführten freien Ende beim Mähen oder beim Bewegen des Rasenmähers in eine Bewegungsrichtung die Störkörper auf dem Rasen, so dass diese auf den Astanheberarm aufgeschoben und damit angehoben werden.

Erfindungsgemäß ist vorgesehen, dass die Adaptereinrichtung zumindest zwei der Aufnahmen aufweist, die so insbesondere voneinander beabstandet angeordnet sind, dass die Adaptereinrichtung mit mindestens zwei verschiedenen Orientierungen auf dem Rasenmäher betriebsbereit und/oder aufnahmebereit für den Astanheberarm montierbar ist. Vorzugsweise sind die zwei verschiedenen Orientierungen in einem Winkel von bis zu 170°, insbesondere 90° oder rechtwinklig zueinander angeordnet.

Der Erfindung liegt die Überlegung zugrunde, dass die aus dem Stand der Technik bekannten Astanhebevorrichtungen sehr spezifische Lösungen darstellen, die individuell auf den jeweiligen Rasenmäher angepasst werden müssen. Bei der Vielzahl auf dem Markt erhältlichen Rasenmähertypen ist es jedoch nicht praktikabel bzw. wirtschaftlich, für jeden einzelnen Rasenmähertyp eine daran angepasste Astanhebevorrichtung zu produzieren.

Demgegenüber schlägt die Erfindung eine Astanhebevorrichtung mit einer Adaptereinrichtung vor, welche in mindestens zwei verschiedenen Orientierungen auf dem Rasenmäher montierbar ist, vorzugsweise so dass die Adaptereinrichtung auf jedem oder fast jedem handelsüblichen Rasenmäher, insbesondere Handasenmäher, verwendbar ist. Die Adaptereinrichtung kann dabei beispielsweise auf einer linken Seite, auf einer rechten Seite quer und längs je nach Wölbung des Gehäuses des Rasenmähers beziehungsweise der Haube des Rasenmähers montiert werden. Die Adaptereinrichtung ist dabei so konstruiert, dass man nach der Montage der Adaptereinrichtung den Astanheberarm in den Aufnahmen nach Bedarf anbringen kann.

Bevorzugt ist die Astanhebevorrichtung ausgebildet, so dass der Astanheberarm oder die Astanheberarme bei Nichtgebrauch zurückschwenkbar ist und insbesondere auf dem Rasenmäher in einer Ruheposition ablegbar ist. Der Astanheberarm bzw. die -arme werden in der Ruheposition bevorzugt formschlüssig gehalten. Alternativ kann der Astanheberarm bzw. die Astanheberarme auch durch eine Verschlussvorrichtung fixiert werden. Insbesondere ist das Rückklappen des Astanheberarms bzw. der -arme in jeder der zwei montierbaren Orientierungen der Adaptereinrichtung möglich.

Bei einer bevorzugten Weiterbildung weist die Astanhebevorrichtung einen Astableiterarm auf, der ausgebildet ist, um von dem Astanheberarm angehobene Störkörper ab- und/oder weiterzuleiten. Insbesondere ist der Astableiterarm als eine Verlängerung zu dem Astanheberarm ausgebildet. Durch den Astableiterarm wird sichergestellt, dass angehobene Störkörper nicht auf den Körper, insbesondere den Motor des Rasenmähers gelangen, sondern über diesen hinweggeschoben werden.

Bei einer bevorzugten konstruktiven Umsetzung weist die Adaptereinrichtung eine mechanische Schnittstelle zur dreh- oder schwenkbaren Lagerung des Astableiterarms auf, so dass je nach Bedarf die Orientierung des Astableiterarms einstellbar ist. Dabei ist vorzugsweise vorgesehen, dass der Astableiterarm in der mechanischen Schnittstelle feststellbar angeordnet ist, wobei die Feststellung beispielsweise durch eine Klemmschraube oder dergleichen erfolgen kann.

Bei einer besonders praktikablen und einfach zu fertigenden Ausführungsform sind die Drehachsen von Astanheberarm und Astableiterarm senkrecht oder im Wesentlichen senkrecht zueinander angeordnet. Dabei kann es aus konstruktiven Grund vorteilhaft sein, wenn die Drehachsen voneinander beabstandet positioniert sind, so dass die Drehachsen in einer Projektionseben zueinander senkrecht oder im wesentlichen senkrecht zueinander angeordnet sind.

Bei einer bevorzugten konstruktiven Umsetzung sind die mindestens zwei Aufnahmen in der Adaptereinrichtung als Bohrungen oder als bohrungsähnliche Löcher ausgebildet, in die jeweils eine Drehachse oder -welle einführbar und/oder befestigbar ist. Die Drehachse ist vorzugsweise als eine Schraube ausgeführt, die in eine der Bohrungen einschraubbar ist. Die Bohrungen beziehungsweise Löcher können als Sacklöcher oder Durchgangslöcher realisiert sein.

Bei einer bevorzugten Ausführungsform weist die Adaptereinrichtung eine langgestreckte oder längliche Grundform auf. Eine besonders kostengünstige Herstellungsweise der Astanhebevorrichtung wird z.B. dadurch erreicht, dass die Adaptereinrichtung als ein quaderförmiger Adapterblock ausgebildet ist, wobei eine erste der Bohrungen bzw. Löcher auf einer ersten Längsseite und eine zweite der Bohrungen bzw. Löcher auf einer ersten Schmalseite eingebracht sind. Bei alternativen Ausführungsformen sind - wie bereits oben erläutert - die Bohrungen als Durchgangsbohrungen ausgebildet, so dass zusätzlich auf der jeweils gegenüberliegenden Längsseite beziehungsweise Schmalseite ein Bohrungseingang vorgesehen sein kann. Die Adaptereinrichtung ist bevorzugt aus Kunststoff oder Metall ausgebildet und zwar insbesondere einstückig, so dass als Halbzeug ein Kunststoffblock oder Metallblock verwendbar ist.

Optional ist die mechanische Schnittstelle zur Aufnahme des Astableiterarms als eine dritte Bohrung beziehungsweise ein drittes bohrungsähnliches Loch insbesondere in eine senkrecht zu der ersten Längsseite und senkrecht zu der ersten Schmalseite angeordneten Oberseite des Adapterblocks eingebracht. In diese dritte Bohrung wird ein Endabschnitt des Astableiterarms eingesteckt und ist dadurch drehbar beziehungsweise schwenkbar gelagert. Die Feststellung des Astableiterarms erfolgt vorzugsweise durch eine Klemmschraube.

Zur Montage der Adaptereinrichtung an dem Rasenmäher sind in der. Adaptereinrichtung Befestigungsbohrungen eingebracht, vorzugsweise vier Befestigungsbohrungen, die insbesondere in den Eckbereichen des Adapterblocks eingebracht sind. Die Befestigungsbohrungen sind - ebenfalls im Sinne einer kostengünstigen Fertigung - senkrecht zu der ersten und zweiten Bohrung und/oder parallel zu der dritten Bohrung anbeziehungsweise eingebracht.

Bei einer bevorzugten Umsetzung der Erfindung ist der Astanheberarm als Edelstahlrohr oder -stab ausgebildet, wobei insbesondere der an der Adaptereinrichtung schwenkbar gelagerte Endabschnitt des Astanheberarms eine Durchgangsbohrung zur Durchführung einer Drehachse beziehungsweise -welle oder einer Schraube aufweist, wobei der Astanheberarm an diesem Endabschnitt vorzugsweise flach ausgebildet ist. Der Astableiterarm ist dagegen bevorzugt als gebogenes Aluminiumrohr realisiert.

Der aufliegende Endabschnitt des Astanheberarm, also das freie Ende des Astanheberarms, weist vorzugsweise einen zumindest abschnittsweise gerundeten oder insgesamt kugelförmigen Gleitkörper auf, der gleitend über den Rasen führbar ist. Alternativ hierzu kann an dem freien Ende eine Rolle oder ein Gleitschuh angeordnet sein. Zur Erhöhung der Stabilität kann der aufliegende Endabschnitt einen Gleitkörper aufweisen, der zunächst zylinderförmig ausgebildet ist und stufenlos in einen gerundeten Kopfbereich übergeht.

Ein weiterer Gegenstand der Erfindung betrifft einen Bausatz für eine Astanhebevorrichtung nach einem der vorhergehenden Ansprüche, wobei der Bausatz jeweils zwei Astleiterarme, Astanheberarme und Adaptereinrichtungen umfasst. Mit diesem Bausatz ist es möglich, an einen Rasenmäher zwei getrennte Baugruppen, die jeweils aus einem Astleiterabschnitt, einem Astanheberarm und einer Adaptereinrichtung bestehen, anzubringen.

Weitere Vorteile, Merkmale und Wirkungen der Erfindung ergeben sich aus der Beschreibung eines Ausführungsbeispiels der Erfindung sowie den beigefügten Figuren. Dabei zeigen:
- Figur 1: ein erstes Ausführungsbeispiel einer erfindungsgemäßen Astanhebevorrichtung auf einem Rasenmäher in schematischer seitlicher Ansicht;
- Figur 2: die Astanhebevorrichtung auf dem Rasenmäher in Figur 1 in schematischer Draufsicht;
- Figur 3 a - d: die Adaptereinrichtung der Astanhebevorrichtung in verschiedenen Ansichten;
- Figur 4: den Astableiterarm der Astanhebevorrichtung in schematischer Draufsicht;
- Figur 5: den Astanheberarm der Astanhebevorrichtung in schematischer Draufsicht.

Einander entsprechende Teile sind in den Figuren jeweils mit den gleichen Bezugszeichen versehen.

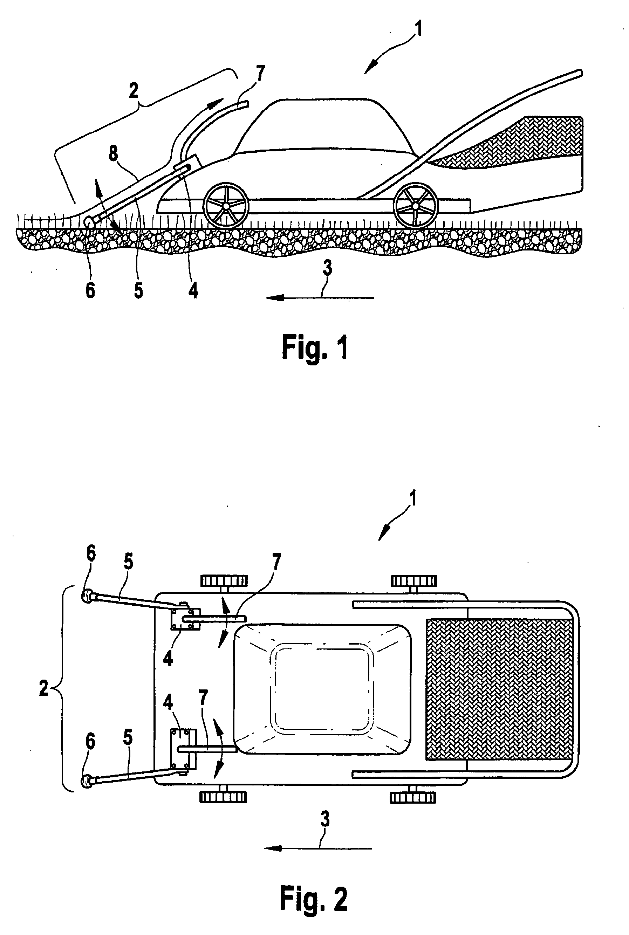

Die Figur 1 zeigt in einer schematischen Seitenansicht einen Rasenmäher 1 auf dem eine Astanhebevorrichtung 2, welche ein Ausführungsbeispiel der Erfindung darstellt, auf der in Bewegungsrichtung 3 des Rasenmähers 1 vorauslaufenden Frontpartie des Rasenmähers 1 angeordnet ist.

Die Astanhebevorrichtung 2 weist einen Adapterblock 4 auf, welcher mittels Verschraubung mit der Front des Rasenmähers 1 fest verbunden ist. An dem Adapterblock 4 ist ein Astanheberarm 5 in vertikaler Richtung schwenkbar gelagert. Der Astanheberarm 5 erstreckt sich in einer Arbeitsposition von dem Adapterblock 4 bis zu einem Auflagebereich, der dem Rasenmäher 1 in Bewegungsrichtung 3 vorläuft, und liegt dort auf dem Boden mit einer Gleitkugel 6 auf. Die Lagerung des Astanheberarms 5 ist so ausgebildet, dass die Gleitkugel 6 aufgrund des Eigengewichts der Gleitkugel 6 und des Astanheberarms 5 auf dem Boden fest aufliegt und bei Bewegung des Rasenmähers 1 in Bewegungsrichtung 3 dem Rasenmäher 1 stechend vorausläuft bzw. vorausgeschoben wird. Bei Nichtgebrauch des oder der Astanheberarme 7 können diese in dem Adapterblock 4 geschwenkt werden, so dass sie in einer Ruheposition auf dem Rasenmäher 1 aufliegen.

Des Weiteren ist in dem Adapterblock 4 ein Astableiterarm 7 angeordnet, der in einer horizontal geneigten Ebene in dem Adapterblock 4 drehbar, jedoch feststellbar, gelagert ist.

Funktionell betrachtet werden bei einer Bewegung des Rasenmähers 1 in Bewegungsrichtung 3 Störkörper, wie zum Beispiel tiefgewachsene Zweige, Äste oder dergleichen, von der Gleitkugel 6 und dem Astanheberarm 5 unterfahren, entlang des Astanheberarms 5 heraufgeschoben und schließlich über den Astableitarm 7 weitergeleitet. Hierdurch werden die Störkörper von dem Boden aufgehoben, so dass der sich in Bewegungsrichtung 3 bewegende Rasenmäher 1 unter den Störkörpern befindliches Gras mähen kann. Die Bewegung der Störkörper ist durch den Pfeil 8 in der Figur 1 nochmals visualisiert.

Die Figur 2 zeigt den Rasenmäher 1 der Figur 1 in einer Draufsicht von oben, wobei zu erkennen ist, dass die Astanhebevorrichtung 2 aus zwei getrennten Baugruppen besteht, die in Bewegungsrichtung 3 seitlich auf dem Rasenmäher 1 mit den Adapterblöcken 4 an der Front angeordnet sind. Zusätzliche Pfeile an den Astableitarmen 7 verdeutlichen nochmals deren Schwenk- oder Drehmöglichkeit.

Nachdem sich die heute marktgängigen Rasenmäher in der äußeren Form und somit in der Möglichkeit der Anbringung des Adapterblocks 4 beziehungsweise der Adapterblöcke 4 unterscheiden, sind die Adapterblöcke 4 so ausgebildet, dass diese - wie es in Figur 2 zu sehen ist - längs zur Bewegungsrichtung 3 (Figur 2 oben) oder quer zur Bewegungsrichtung 3 (Figur 2 unten), also in verschiedenen Orientierungen angebracht werden können. Die notwenigen Aufnahmen für den Astanheberarm 5 beziehungsweise den Astableitarm 7 sind in dem Adapterblock 4 mehrfach so eingebracht, dass man je nach Montage beziehungsweise Orientierung des Adapterblocks 4 den Astanheberarm 5 beziehungsweise den Astableitarm 7 nach Bedarf an die vorhandenen Anbringmöglichkeiten anbringen kann.

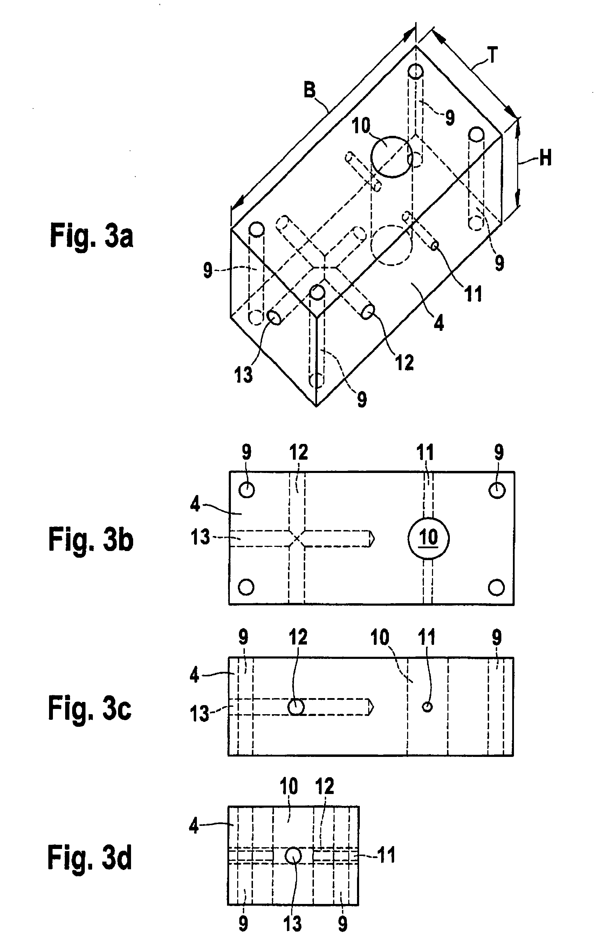

Die Figur 3 a, b, c und d zeigen den Adapterblock 4 in einer schematischen dreidimensionalen Darstellung, einer Draufsicht, einer Seitenansicht und einer Vorderansicht. Der Adapterblock 4 weist in den Eckbereichen vier durchgehende Befestigungsbohrungen 9 auf, die einen Durchmesser von 5 mm haben und zur Durchführung von Befestigungsschrauben zur Befestigung des Adapterblocks 4 an dem Gehäuse des Rasenmähers 1 ausgebildet sind. Zur Befestigung werden beispielsweise Schrauben mit einer Größe 5 x 40 mm verwendet.

Zur Aufnahme des Astableiterarms 7 ist in dem Adapterblock 4 an der Oberseite eine Bohrung 10 mit einem Durchmesser von z.B. 12,1 mm eingebracht , die als Sackloch ausgeführt ist. In diese Bohrung 10 wird ein Endabschnitt des Astableiterarms 7 eingesteckt, welcher dann um die Tiefenerstreckung der Bohrung 10 zunächst drehbar ist. Zur Fixierung des Astableiterarms 7 ist eine senkrecht zu der Bohrung 10 angeordnete Durchgangsbohrung 11 mit einen Durchmesser von z.B. 2,5 mm eingebracht, die sich abschnittsweise mit der Bohrung 10 überlappt. Zur Fixierung des Astableiterarms 7 wird eine Bohrschraube z.B. mit den Maßen 3,5 x 25 mm in die Durchgangsbohrung 11 eingeschraubt, so dass der Astableiterarm 7 geklemmt wird.

Zur schwenkbaren Befestigung des Astanheberarms 5 an dem Adapterblock 4 sind zwei weitere Bohrungen 12 und 13 eingebracht, die je nach Orientierung des Adapterblocks 4 auf dem Rasenmäher 1 alternativ verwendbar sind. Die Bohrung 12 erstreckt sich als Durchgangsbohrung von einer Längsseite zur nächsten Längsseite, wohingegen die Bohrung 13 an der Schmalseite des Adapterblocks 4 angebracht ist und als Sackbohrung ausgebildet ist. Die Bohrungen 12 und 13 sind in der gleichen Höhe des Adapterblocks 4 angeordnet, so dass sie sich abschnittsweise überlappen. Die Bohrung 12 beziehungsweise 13 weisen einen Durchmesser von 5 mm auf. Bei der Montage wird der Astanheberarm 5 auf eine Schraube mit Scheibe aufgefädelt und diese Schraube in die Bohrung 12 beziehungsweise 13 eingeschraubt, so dass der Astanheberarm 5 beweglich befestigt ist.

Der Adapterblock 4 kann prinzipiell aus Metall oder aus Kunststoff hergestellt werden, das vorliegende Ausführungsbeispiel ist aus Kunststoff gefertigt. Die Abmaße des Adapterblocks 4 sind B x H x T 75 mm x 25 mm x 35 mm.

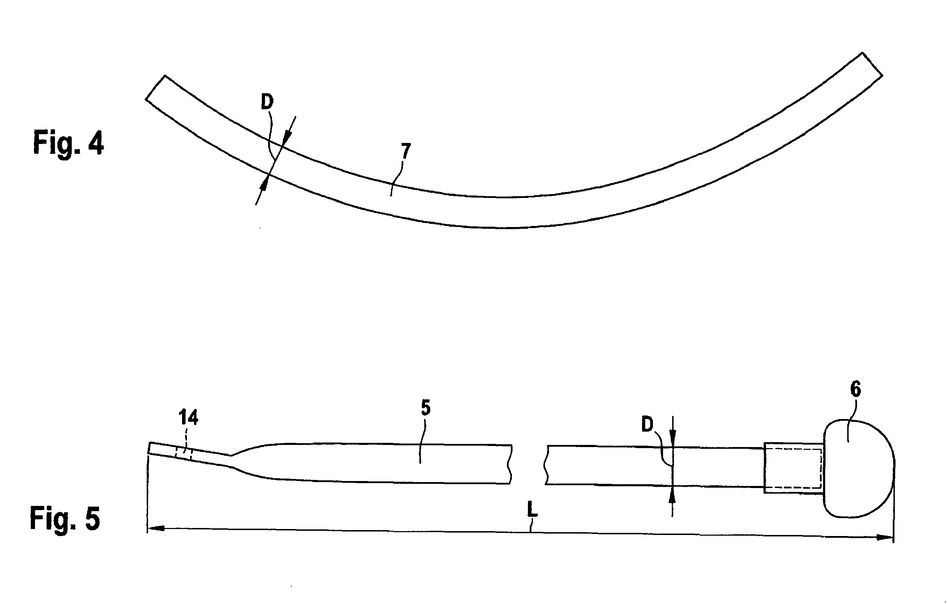

Die Figur 4 zeigt in einer schematischen Darstellung den Astableiterarm 7, welcher als gebogenes Aluminiumrohr ausgebildet ist. Das Aluminiumrohr weist in diesem Beispiel einen Außendurchmesser von D = 12 mm bei einer Wandstärke von 1,5 mm auf. Die Figur 5 zeigt den Astanheberarm 5, welcher eine Gesamtlänge von L = 350 mm hat. Der Astanheberarm 5 ist aus einem Edelstahlrohr mit einem Außendurchmesser von D = 12,0 mm, bei einer Wandstärke von 1,5 mm gefertigt. An dem Adapterblock 4 zu befestigenden Ende ist der Astanheberarm 5 über einen Endabschnitt von 45 mm abgeflacht und weist in diesem Bereich eine Durchgangsöffnung 14 mit einem Durchmesser von 6,5 mm auf, so dass sich der Astanheberarm 5 um die in dem Adapterblock 4 zu befestigende Schraube frei drehen kann. Wie sich aus der Figur 5 beziehungsweise der Figur 2 ergibt, ist dieser Endabschnitt des Astanheberarms 5 gekröpft oder gewinkelt zu der sonstigen Längserstreckung des Astanheberarms 5 ausgebildet. An dem freien Ende des Astanheberarms 5 ist die Gleitkugel 6 aufgesetzt oder aufgepresst, welche in dem Ausführungsbeispiel aus Kunststoff besteht und einen pilzförmigen Querschnitt aufweist. Alternativ kann auch ein Gleitzylinder aufgesetzt sein, der einen zylinderförmigen Abschnitt aufweist, der in einen im Querschnitt gerundet ausgebildeten Kopfabschnitt übergeht.

Zusammenfassend ist bei dem gezeigten Ausführungsbeispiel der Vorteil darin zu sehen, dass der Adapterblock 4 sowohl längs als auch quer zur Bewegungsrichtung 3 des Rasenmähers 1 auf dem Rasenmäher 1 befestigbar ist, ohne, dass die Bohrungen 12, 13 zur Aufnahme des Astanheberarms 5, beziehungsweise des Astableiterarms 7 geändert werden müssen. Damit ist die gezeigte Astanhebevorrichtung 2 prinzipiell universell für sämtliche gängigen Rasenmähertypen einsetzbar.

### Bezugszeichenliste:

- 1: Rasenmäher
- 2: Astanhebevorrichtung
- 3: Bewegungsrichtung
- 4: Adapterblock
- 5: Astanheberarm
- 6: Gleitkugel
- 7: Astableiterarm
- 8: Bewegungskurve eines Störkörpers
- 9: Befestigungsbohrungen
- 10: Bohrung
- 11: Durchgangsbohrung
- 12: Bohrungen
- 13: Bohrungen
- 14: Durchgangsöffnung

## Patentansprüche

1. Astanhebevorrichtung (2) für einen Rasenmäher (1)
mit einem Astanheberarm (5) und
mit einer Adaptereinrichtung (4), welche zur Montage an dem Rasenmäher (1) ausgebildet ist und welche mindestens eine mechanische Aufnahme (12, 13) für den Astanheberarm (5) aufweist,
wobei der Astanheberarm (5) über die Aufnahme (12, 13) dreh- und/oder schwenkbar gelagert ist, so dass beim Mähen ein freies Ende (6) des Astanheberarms (5) auf dem Rasen aufliegt und auf dem Rasen befindliche Störkörper durch den Astanheberarm (5) angehoben werden,
**dadurch gekennzeichnet, dass**
die Adaptereinrichtung (4) mindestens zwei der Aufnahmen (12,13) aufweist, die so angeordnet sind, dass die Adaptereinrichtung (4) in mindestens zwei verschiedenen Orientierungen auf dem Rasenmäher (1) montierbar ist.

2. Astanhebevorrichtung (2) nach Anspruch 1, **gekennzeichnet durch** einen Astableiterarm (7), der ausgebildet ist, um von dem Astanheberarm (5) angehobene Störkörper abzuleiten.

3. Astanhebevorrichtung (2) nach Anspruch 1 oder 2, **dadurch gekennzeichnet, dass** die Adaptereinrichtung (4) eine mechanische Schnittselle (10) zur dreh- oder schwenkbaren Lagerung des Astableiterarms (7) aufweist.

4. Astanhebevorrichtung (2) nach Anspruch 3, **dadurch gekennzeichnet, dass** der Astableiterarm (7) in der mechanischen Schnittstelle (10) feststellbar angeordnet ist.

5. Astanhebevorrichtung (2) nach einem der Ansprüche 3 oder 4, **dadurch gekennzeichnet, dass** die Drehachsen von Astanheberarm (5) und Astableiterarm (7) senkrecht oder im wesentlichen senkrecht zueinander angeordnet sind.

6. Astanhebevorrichtung (2) nach einem der vorhergehenden Ansprüche, **dadurch gekennzeichnet, dass** die Adaptereinrichtung (4) eine langgestreckte Grundform aufweist.

7. Astanhebevorrichtung (2) nach einem der vorhergehenden Ansprüche, **dadurch gekennzeichnet, dass** die mindestens zwei Aufnahmen (12, 13) als Bohrungen bzw. Löcher ausgebildet sind.

8. Astanhebevorrichtung (2) nach Anspruch 6 oder 7, **dadurch gekennzeichnet, dass** die Adaptereinrichtung als quaderförmiger Adapterblock (4) ausgebildet ist, wobei eine erste der Bohrungen auf einer ersten Längsseite und eine zweite der Bohrungen auf einer ersten Schmalseite des Adapterblocks (4) eingebracht sind.

9. Astanhebvorrichtung (2) nach Anspruch 8, **dadurch gekennzeichnet, dass** die mechanische Schnittstelle als eine dritte Bohrung (10) in eine senkrecht zu der ersten Längsseite und senkrecht zu der ersten Schmalseite angeordneten Oberseite des Adapterblocks (4) eingebracht ist.

10. Astanhebvorrichtung (2) nach einem der vorhergehenden Ansprüche, **dadurch gekennzeichnet, dass** die Adaptereinrichtung (4) Befestigungsbohrungen (9), vorzugsweise vier Befestigungsbohrungen zur Montage der Adaptereinrichtung (4) an dem Rasenmäher (1) aufweist.

11. Astanhebevorrichtung (2) nach Anspruch 10, **dadurch gekennzeichnet, dass** die Befestigungsbohrungen (9) senkrecht zu der ersten und zweiten Bohrung (12, 13) und/oder parallel zu der dritten Bohrung (10) angebracht sind.

12. Astanhebevorrichtung (2) nach einem der vorhergehenden Ansprüche, **dadurch gekennzeichnet, dass** die Adaptereinrichtung (4) insbesondere einstückig aus Kunststoff oder Metall ausgebildet ist.

13. Astanhebevorrichtung (2) nach einem der vorhergehenden Ansprüche, **dadurch gekennzeichnet, dass** der Astanheberarm (5) als Edelstahlrohr oder -stab ausgebildet ist.

14. Astanhebevorrichtung (2) nach einem der vorhergehenden Ansprüche, **dadurch gekennzeichnet, dass** der Astableiterarm (7) als gebogenes Aluminiumrohr oder -stab ausgebildet ist.

15. Astanhebevorrichtung (2) nach einem der vorhergehenden Ansprüche, **dadurch gekennzeichnet, dass** an dem freien Ende des Astanheberarm ein gerundeter oder kugelförmiger Gleitkörper (6) angeordnet ist.

16. Bausatz für eine Astanhebevorrichtung (2) nach einem der vorhergehenden Ansprüche, welcher jeweils zwei der Astableiterarme (5), der Astanheberarme (7) und der Adaptereinrichtungen (4) umfasst.
